# EUROPEAN PATENT APPLICATION

(11) **EP 1 785 851 A1**
(43) Date of publication of application: **16.05.2007**
(21) Application number: 06124051.1
(22) Date of filing: 14.11.2006
(51) Int. Cl.: G06F 9/44, H04M 3/53, H04Q 7/32

(54) **Method for selecting the theme of a mobile communication terminal using MMS (multimedia messaging)**

(30) Priority: 14.11.2005 KR 20050108812
(71) Applicant: Samsung Electronics Co., Ltd., Suwon-si, Gyeonggi-Do (KR)
(72) Inventor: Ahn, Soo-Jeong, Gyeonggi-do (KR)
(74) Representative: Zimmer, Franz-Josef

(57) **Abstract**

Provided is a method for setting the environment of a mobile communication terminal providing a Multimedia Messaging Service (MMS). The method includes displaying a received multimedia message, extracting contents from the received multimedia message to construct a theme, setting the environment of the mobile communication terminal by mapping the contents of the theme to environment settings of the mobile communication terminal based on a one-to-one correspondence, and automatically and collectively changing the environment of the mobile communication terminal according to the environment setting.

## Description

The present invention generally relates to a method for setting the environment of a mobile communication terminal and a corresponding mobile communication terminal, and in particular, to a method for automatically setting and changing the environment of a mobile communication terminal using contents of a Multimedia Messaging Service (MMS).

With the wide use of mobile communication terminals, the number of mobile communication terminal users is always increasing, and mobile communication terminals are continually being improved. Thus, the number of user setting functions is increasing to facilitate the use of mobile communication terminals and allow expression that suits personal tastes. For example, the users can change the environment of the mobile communication terminal, such as a background screen or a ringtone, as they want.

However, when users desire to change a background screen, a ringtone, a user name, a font size or type, or a background color of a conventional mobile communication terminal, they have to make a selection and perform setting for each function.

It is the object of the present invention to provide a method and a mobile communication terminal for setting and automatically and collectively changing the environment of a mobile communication terminal using different kinds of contents included in a multimedia message received by the mobile communication terminal.

This object is solved by the subject matter of the independent claims.

Preferred embodiments are defined by the subject matter of the dependent claims.

According to one aspect of the present invention, there is provided a method for setting the environment of a mobile communication terminal by providing a Multimedia Messaging Service (MMS). The method includes displaying a received multimedia message, extracting contents from the received multimedia message to construct a theme, setting the environment of the mobile communication terminal by mapping the contents of the theme to environment settings of the mobile communication terminal based on a one-to-one correspondence, and automatically and collectively changing the environment of the mobile communication terminal according to the environment setting.

The present invention will become more apparent from the following detailed description when taken in conjunction with the accompanying drawings in which:
FIG. 1 is a block diagram of a mobile communication terminal according to the present invention;
FIG. 2 illustrates a process of constructing a theme using contents of a received multimedia message and mapping contents of the theme to environment setting elements of a mobile communication terminal according to present invention;
FIG. 3 is a flowchart illustrating a process of generating a multimedia message with which a theme can be constructed and transmitting the multimedia message at a transmitting mobile communication terminal according to the present invention;
FIG. 4 is a flowchart illustrating a method for setting and changing an environment using a received multimedia message at a receiving mobile communication terminal according to the present invention; and
FIG. 5 is a flowchart illustrating a method for setting and changing an environment using a received multimedia message at a receiving mobile communication terminal according to another embodiment of the present invention.

Preferred embodiments of the present invention will now be described in detail with reference to the annexed drawings. In the following description, a detailed description of known functions and configurations incorporated herein has been omitted for conciseness.

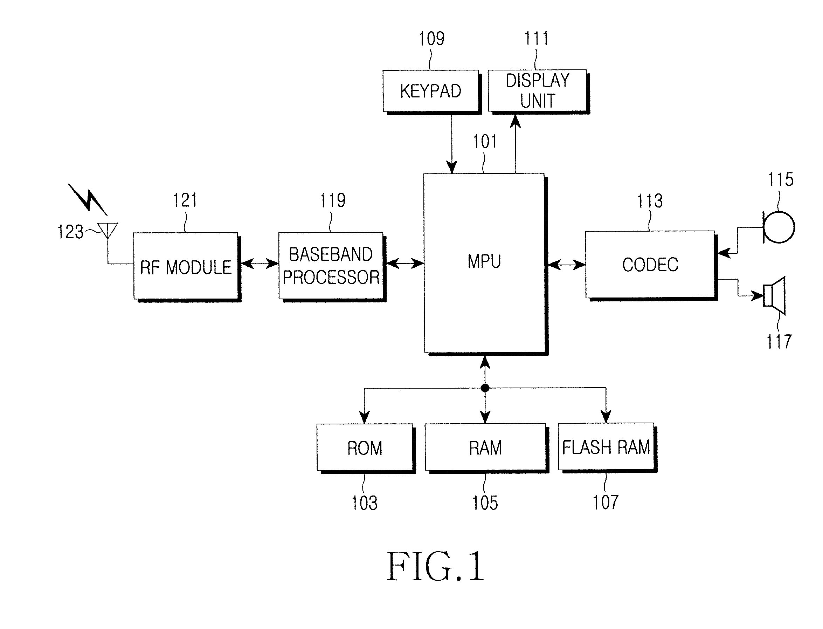

FIG. 1 is a block diagram of a mobile communication terminal according to the present invention. In the following description, the mobile communication terminal may be, for example, a cellular phone, a Personal Communication System (PCS) phone, a Personal Data Assistant (PDA), or an International Mobile Telecommunication (IMT)-2000, and the general structure of these examples will be explained.

Referring to FIG. 1, a Micro-Processor Unit (MPU) 101 controls the overall operation of the mobile communication terminal. For example, the MPU 101 performs processing and control for voice communication and data communication, determines whether a flag exists in a header of a multimedia message, and processes environment setting and change requests using mapping between contents of the multimedia message and environment setting elements of the mobile communication terminal according to the present invention.

A Read Only Memory (ROM) 103 stores micro-codes of a program for processing and controlling operations of the MPU 101 and reference data. A Random Access Memory (RAM) 105 serves as a working memory of the MPU 101 and stores temporary data generated during execution of programs. A flash RAM 107 is a type of nonvolatile memory that can be erased and reprogrammed in units of blocks. The flash RAM 107 stores various reserved data that can be updated, such as a phonebook and outgoing and incoming messages. According to the present invention, the flash RAM 107 stores contents included in a multimedia message and stores mapping information about mapping between contents selected from the included contents and environment setting elements of the mobile communication terminal.

A keypad 109 includes a plurality of function keys such as number keys 0 - 9, a menu button, a cancel (erase) button, a confirm button, a talk button, an end button, an Internet access button, and navigation buttons (or direction buttons). The keypad 109 provides key input data corresponding to a key input by the user to the MPU 101. A display unit 111 displays state information generated during the operation of the mobile communication terminal, a limited number of characters, and many moving and still pictures. The display unit 111 may use a liquid crystal display (LCD). In the present invention, an 'environment setting menu' may be displayed as an option menu in a multimedia message display screen.

A Coder-Decoder (CODEC) 113 connected to the MPU 101 and a speaker 117 and a microphone 115 that are connected to the CODEC 113 form a voice input/output block used for phone communication and voice recording. The CODEC 113 converts digital data from the MPU 101 into an analog voice signal and transmits the analog voice signal through the speaker 117. The CODEC 113 also converts a voice signal received through the microphone 115 into digital data and transmits the digital data to the MPU 101.

A Radio Frequency (RF) module 121 down-converts a radio-frequency signal received through an antenna 123 and provides the up-converted signal to a baseband processor 119 and up-converts a baseband signal from the baseband processor 119 and transmits the up-converted signal through the antenna 123. The baseband processor 119 processes a baseband signal transmitted and received between the RF module 121 and the MPU 101. For example, the baseband processor 119 performs channel coding and spreading on transmission data and performs de-spreading and channel decoding on a received signal.

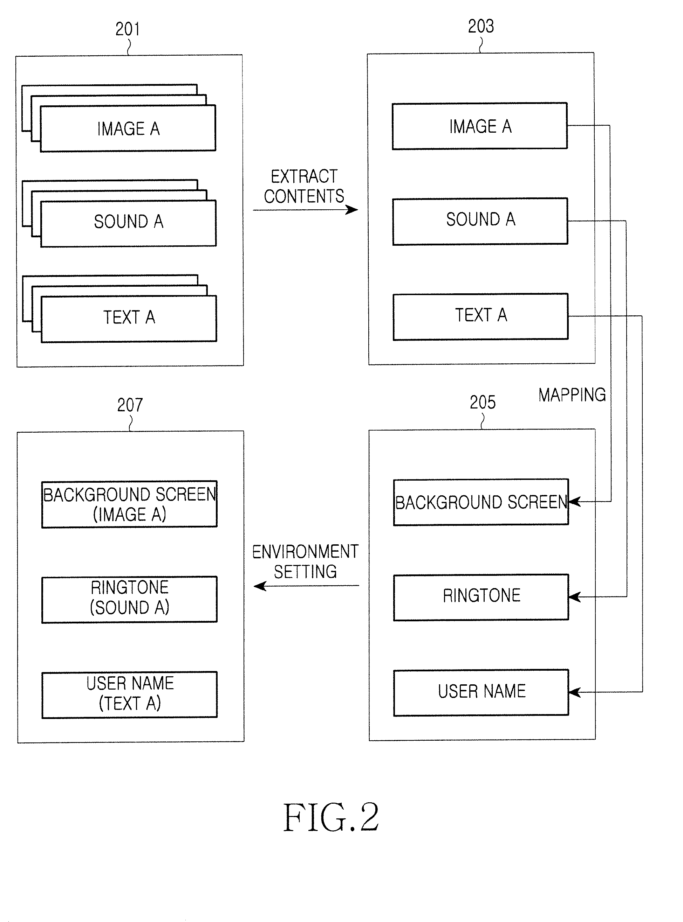

FIG. 2 illustrates a process of constructing a theme using contents of a received multimedia message and mapping contents of the theme to environment setting elements of a mobile communication terminal according to the present invention.

Before setting the environment of the mobile communication terminal, a user stores a multimedia message composed of different kinds of contents, i.e., images, sounds, and texts. For example, reference block 201 indicates a multimedia message composed of several images, sounds, and texts. The user can select an image A, a sound A, and a text A for environment setting elements of the mobile communication terminal from the contents of the multimedia message and construct a theme like in block 203 using the selected image A, sound A, and text A. The MPU 101 maps the contents of the theme to environment setting elements of the mobile communication terminal, i.e., a background screen, a ringtone, and a user name like in block 205. The MPU 101 then sets the environment of the mobile communication terminal using the mapped elements like in block 207, thereby automatically and collectively changing the environment of the mobile communication terminal. Mapping information about mapping between the selected contents of the multimedia message and the environment setting elements of the mobile communication terminal is stored in the flash RAM 107.

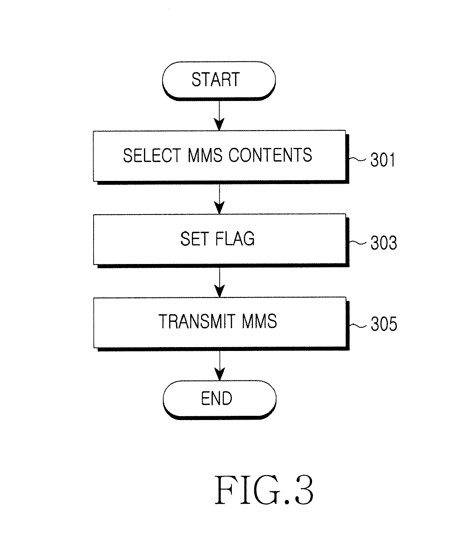

FIG. 3 is a flowchart illustrating a process of generating a multimedia message with which a theme can be constructed and transmitting the multimedia message at a transmitting mobile communication terminal according to the present invention.

Referring to FIG. 3, the user selects contents for a multimedia message in step 301. This step is the same as a conventional screen for generating a multimedia message. However, when the user desires a multimedia message with which a theme can be constructed, the user performs step 303 to set a flag in a header of the multimedia message. Step 303 is optional. The flag may be set in various ways, but two ways are suggested in the present invention. First is to set a flag in a header of the multimedia message if the user selects a menu for generating a multimedia message with which a theme can be constructed. Second is to set a flag in a header of the multimedia message according to user's selection in a message window asking whether the user desires to set a multimedia message generated in a conventional multimedia message generating menu as a multimedia message with which a theme can be constructed. After completion of flag setting, the multimedia message is transmitted in step 305.

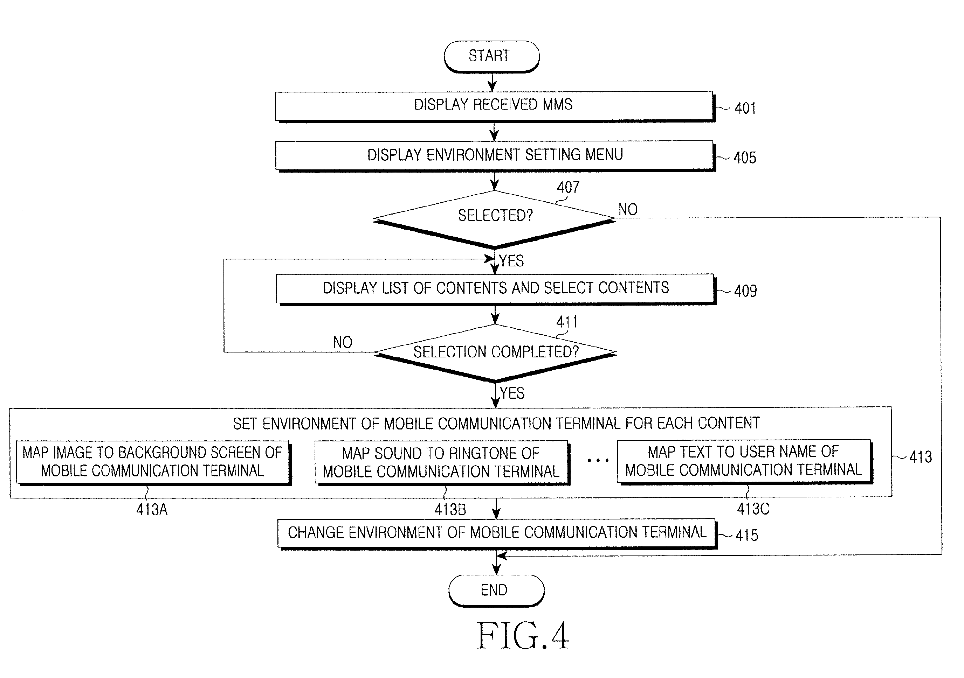

FIG. 4 is a flowchart illustrating a method for setting and changing an environment using a received multimedia message at a receiving mobile communication terminal according to the present invention.

The user checks a received multimedia message. Thus, the received multimedia message is displayed on a screen in step 401. If the user presses a specific key, the process goes to step 405 to display an 'environment setting menu'. The specific key may be a menu key or a specific key for displaying the 'environment setting menu'. Conventionally, if the menu key is pressed, option menus having various functions are displayed. Thus, the 'environment setting menu' may be one of the option menus. If the user selects the 'environment setting menu' in step 407, a list of contents of the received multimedia message is displayed for user's selection in step 409. It is then determined in step 411 if the selection is completed. If so, the process continues to step 413. If not, the process returns to step 409. The list of contents may allow a user's selection by arranging contents that can be mapped to environment setting elements and providing check boxes for the contents. The user may select contents and construct the theme like in block 203 of Fig. 2 with the selected contents. The user sets the environment of the mobile communication terminal by mapping each of the contents to each of the environment setting elements of the mobile communication terminal based on a one-to-one correspondence as in blocks 203 and 204 of FIG. 2. In step 413A, an image of a received multimedia message is mapped to a background screen of the mobile communication terminal for environment setting. In step 413B, a sound of the received multimedia message is mapped to a ringtone of the mobile communication terminal for environment setting. In step 413C, a text of the received multimedia message is mapped to a user name of the mobile communication terminal for environment setting. According to such environment setting, the environment of the mobile communication terminal is automatically and collectively changed in step 415.

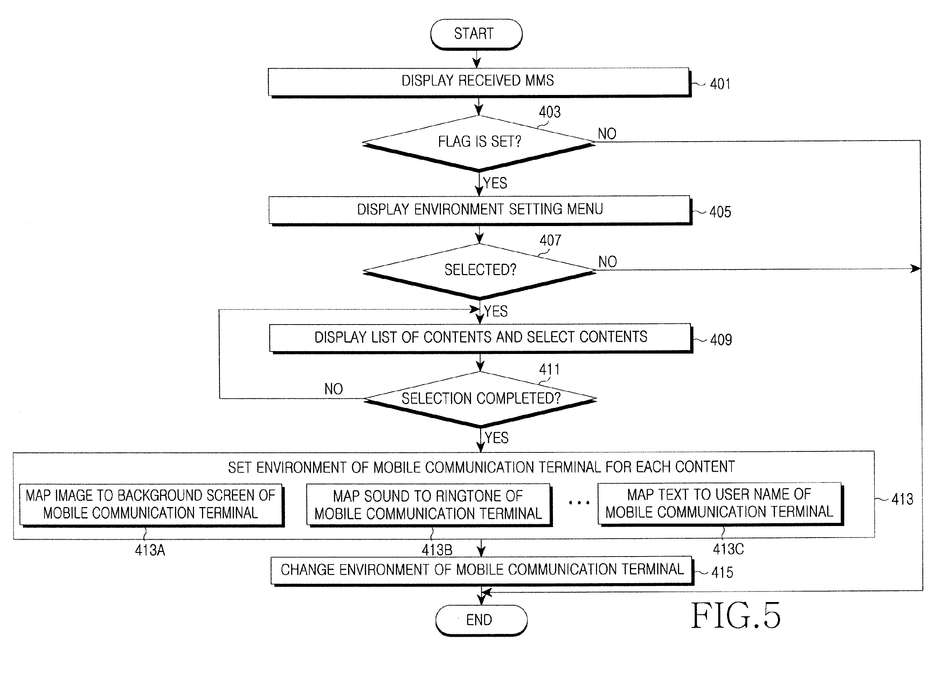

FIG. 5 is a flowchart illustrating a method for setting and changing an environment using a received multimedia message at a receiving mobile communication terminal according to another embodiment of the present invention.

In FIG. 5, the mobile communication terminal automatically sets and changes its environment for a case where the multimedia message generated in FIG. 3 is received.

The user checks a received multimedia message. The received multimedia message is displayed on a screen in step 401. The MPU 101 checks if a flag is set in a header of the received multimedia message in step 403. If the flag exists and is set in the header of the received multimedia message, the process goes to step 405 to display the 'environment setting menu'. If the flag is not set in the header of the received multimedia message, the 'environment setting menu' is not displayed not to allow the user to use the 'environment setting menu'. If the flag is set, the process goes to step 407. Steps following and including step 407 are the same as those in FIG. 4.

By distinguishing a multimedia message used for environment setting from a conventional multimedia message using the flag, an operator can offer a service that provides various contents at a time as the concept of 'giving a present'. Conventional 'giving a present' is a service that separately provides a ringtone and a background screen, whereas 'giving a present' according to the present invention can provide both a ringtone and a background screen at a time through a multimedia message.

According to the present invention, different kinds of contents of a multimedia message received by a mobile communication terminal are set as a theme and are mapped to environment setting elements of the mobile communication terminal, such as a background screen, a ringtone, a user name, a font size or type, and a background color, based on a one-to-one correspondence for environment setting. The environment of the mobile communication terminal is automatically and collectively changed according to the environment setting, thereby improving user's convenience.

While the present invention has been shown and described with reference to preferred embodiments thereof, it will be understood by those skilled in the art that various changes in form and details may be made therein without departing from the scope of the invention.

## Claims

1. A method for setting the environment of a mobile communication terminal providing an MMS, the method comprising the steps of:
displaying a received multimedia message;
extracting contents from the received multimedia message to construct a theme;
setting the environment of the mobile communication terminal by mapping the contents of the theme to environment settings of the mobile communication terminal based on a one-to-one correspondence; and
automatically and collectively changing the environment of the mobile communication terminal according to the environment setting.

2. The method of claim 1, wherein the step of displaying the received multimedia message comprises displaying an environment setting menu through which the environment of the mobile communication terminal can be set and automatically and collectively changed.

3. The method of claim 2, further comprising:
checking a flag indicating that a theme can be constructed with the received multimedia message; and
displaying the environment setting menu if the flag is set and not displaying the environment setting menu if the flag is not set.

4. The method of claim 3, wherein the flag is included in a header of the received multimedia message.

5. The method of one of claims 1 to 4, wherein the step of constructing a theme comprises displaying a list of the contents of the received multimedia contents and selecting contents from the list.

6. The method of one of claims 1 to 5, wherein the contents include an image, a moving picture, a sound, a text, a font size or type, or a background color.

7. The method of claim 6, wherein the environment settings of the mobile communication terminal include a background screen, a ringtone, a user name, a font size or type, or a background color.

8. The method of claim 7, wherein the step of setting the environment of the mobile communication terminal comprises mapping one of the image and moving picture to the background screen of the mobile communication terminal, the sound to the ringtone of the mobile communication terminal, the text to the user name of the mobile communication terminal, the font to the font of the mobile communication terminal, and the background color to the background color of the mobile communication terminal.

9. A method for setting the environment of a mobile communication terminal providing an MMS, the method comprising the steps of:
selecting contents to be included in a multimedia message;
setting a flag indicating that a theme can be constructed with the multimedia message; and
transmitting the multimedia message including the selected contents and the flag.

10. The method of claim 9, wherein the flag is included in a header of the multimedia message.

11. A mobile communication terminal comprising means for carrying out the steps of one of claims 1 to 10.
